# EUROPÄISCHE PATENTSCHRIFT

(11) **EP 2 868 585 B1**
(45) Veröffentlichungstag und Bekanntmachung des Hinweises auf die Patenterteilung: **24.02.2016**
(21) Anmeldenummer: 14188822.2
(22) Anmeldetag: 14.10.2014
(51) Int. Cl.: B65B 13/32

(54) **Verfahren und Vorrichtung zur Verschweißung von Umreifungsbändern aus Kunststoff**
Method and device for welding plastic straps
Procédé et dispositif destinés à la soudure de bandes de cerclage en plastique

(30) Priorität: 05.11.2013 DE 102013222427
(43) Veröffentlichungstag der Anmeldung: 06.05.2015
(73) Patentinhaber: Krones Aktiengesellschaft, 93073 Neutraubling (DE)
(72) Erfinder: Westermeier, Christian, 93073 Neutraubling (DE); Stadler, Thomas, 93073 Neutraubling (DE)
(74) Vertreter: Benninger, Johannes

(56) Entgegenhaltungen:
- EP-A1- 1 310 428
- DE-A1- 2 532 217
- US-A- 3 316 687
- US-A1- 2003 061 785

## Beschreibung

Die vorliegende Erfindung betrifft ein Verfahren zur Verschweißung von Umreifungsbändern aus Kunststoff gemäß den Merkmalen des Oberbegriffs des Anspruchs 1 sowie eine Vorrichtung zur Durchführung eines solchen Verfahrens gemäß den Merkmalen des Oberbegriffs des Anspruchs 11.

Zur Sicherung von mehreren zu einer Artikelgruppe gruppierten Artikeln ist bekannt, diese mit einer so genannten Umreifung zu versehen.

Bei den Artikeln kann es sich beispielsweise um Objekte, wie etwa verpackte oder unverpackte Gegenstände, Kartonagen, Behälter, wie etwa Getränkeflaschen oder Dosen, oder um Gebinde aus mehreren Objekten handeln, wobei die Objekte eines Gebindes beispielsweise selbst vermittels einer Umreifung, einer Umverpackung, wie etwa einer Umwickelung, einem Schrumpfschlauch oder eines Kartons oder eines Tragegestells zusammengehalten werden können, um nur einige denkbare Ausgestaltungen zu nennen.

Vor der Umreifung werden die Artikel zunächst entsprechend einer gewünschten Anordnung innerhalb einer Artikelgruppe zusammengestellt und anschließend bei der Umreifung mit einem Verschlussband, dem so genannten Umreifungsband umlegt. Unter das Umreifungsband kann zur Schonung der Artikel ein Kantenschutz eingebracht werden. Das Umreifungsband wird dann mit Hilfe einer Umreifungsvorrichtung gespannt, gesichert und abgeschnitten.

Je nach erforderlicher Kraft, Zeitspanne, innerhalb der zwei aufeinander folgende Umreifungen erfolgen, sowie Größe der Artikel und der aus mehreren zusammengestellten Artikel gebildeten und zu umreifenden Artikelgruppe, werden entweder manuelle Umreifungsgeräte eingesetzt, bei denen das Band von einer Person über einen Spannhebel festgezurrt wird, oder es kommen Umreifungsmaschinen zur Anwendung, die den Vorgang automatisieren und die sowohl hohe Kräfte aufbringen, als auch eine hohe Taktung erzielen können. Als Umreifungsband wird je nach benötigter Festigkeit ein Kunststoff- oder Stahlband verwendet. Das festgezurrte Band wird nach dem Spannen durch Klammern, Hülsen, Plomben oder Schweißtechniken gesichert und abgeschnitten.

Einen ersten Kostenfaktor beim Umgang mit Artikeln, beispielsweise in der Verpackungstechnik und in der Verpackungsindustrie, stellt die Taktung dar, mit der innerhalb möglichst kurzer Zeit mit möglichst vielen Artikeln umgegangen werden kann. Je höher die Taktung, desto höher ist dabei der Artikelumsatz und umso höher und damit besser ist die Auslastung der hierfür vorgesehenen Maschinen, Anlagen und Einrichtungen. Die Taktung kann somit als Quotient der Anzahl von Artikeln und der Zeitdauer, innerhalb der mit dieser Anzahl von Artikeln umgegangen wird, beschrieben werden.

Um hohe Taktungen erzielen zu können, werden in der Verpackungstechnik und in der Verpackungsindustrie vollautomatische Umreifungsvorrichtungen verwendet, welche in Verbindung mit Umreifungsbändern aus Kunststoff innerhalb von Bruchteilen von Sekunden das Umreifungsband um eine Artikelgruppe legen, festzurren und abschneiden und zur Sicherung innerhalb von Millisekunden verschweißen.

Die Herstellung einer Umreifung mit einem Umreifungsband aus Kunststoff, welches vermittels einer vollautomatischen Umreifungsvorrichtung um eine Artikelgruppe gelegt, gespannt, geklemmt und geschnitten sowie durch Erhitzen verschweißt wird, ist beispielsweise durch DE 10 2007 022 438 B3 bekannt. Die Umreifungsvorrichtung umfasst eine Schweißeinrichtung mit einer beweglich angeordneten Schweißzunge, einen Stempel und eine Gegendruckplatte. Um das Umreifungsband aus Kunststoff zu verschweißen, ragt die Schweißzunge zunächst zwischen die überlappenden Enden des Umreifungsbands. Nach dem Anschmelzen des Umreifungsbands wird die Schweißzunge zurückgezogen, woraufhin der Stempel die beiden überlappenden Enden des Umreifungsbands gegen die Gegendruckplatte presst, wodurch die beiden überlappenden Enden miteinander verschweißt und dadurch stoffschlüssig verbunden werden.

Durch WO 2012/052312 A1 ist bekannt, einen Tragegriff an einem durch eine Umreifung zusammengehaltenen Gebinde vorzusehen, welcher am Umreifungsband befestigt ist oder das Umreifungsband zumindest zum Teil umgreift. Die Befestigung des Tragegriffs am Umreifungsband kann ebenfalls wie das Sichern des Umreifungsbands durch Verschweißen erfolgen.

Schweißeinrichtungen zur Sicherung von Umreifungen durch Verschweißen der überlappenden Enden von Umreifungsbändern aus Kunststoff und/oder zur zuvor erwähnten Befestigung eines Tragegriffs an einem Umreifungsband, sind beispielsweise durch EP 1 970 311 A2, DE 103 23 153 A1 und durch DE 103 23 171 A1 bekannt. Diese umfassen jeweils eine beweglich angeordnete Schweißzunge, einen Stempel und eine Gegendruckplatte. Um das Umreifungsband aus Kunststoff zu verschweißen, ragt die heiße Schweißzunge zunächst zwischen die sich gegenseitig überlappenden Enden des Umreifungsbands. Nach dem Anschmelzen des Umreifungsbands wird die Schweißzunge zurückgezogen, woraufhin der Stempel die beiden überlappenden Enden des Umreifungsbands gegen die Gegendruckplatte presst, um die beiden überlappenden Enden miteinander zu verschweißen und dadurch stoffschlüssig miteinander zu verbinden.

Durch DE 199 48 880 A1 ist bekannt, die beiden überlappenden Enden eines Umreifungsbands aus Kunststoff vermittels Laserschweißens zu sichern.

Durch DE 602 01 785 T2 ist bekannt, die beiden überlappenden Enden eines Umreifungsbands aus Kunststoff vermittels Reibschweißens zu sichern.

Damit ein Umreifungsband aus Kunststoff, dessen überlappenden Enden, um es zu sichern, stoffschlüssig miteinander verbunden sind, immer unter der gleichen Krafteinwirkung entfernt werden kann, ist durch DE 10 2004 022 418 A1 bekannt, eine Sollbruchstelle im Umreifungsband vorzusehen.

EP-A-1 310 428 beschreibt eine Umreifungsvorrichtung mit einer Schweißzunge, die auf eine Standby-Temperatur geheizt wird.

Einen zweiten Kostenfaktor beim Umgang mit Artikeln, beispielsweise in der Verpackungstechnik und in der Verpackungsindustrie, stellt die während jeden Umgangs mit Artikeln innerhalb einer Kette von Umgängen mit Artikeln erzielbare Qualität dar, mit welcher Qualität ein jeder Umgang mit Artikeln erfolgt oder abgeschlossen wird, bevor ein anderer Umgang mit Artikeln in der Kette erfolgt.

Im Hinblick auf eine zu jedem Zeitpunkt eines Umreifungsprozesses gleichbleibende Qualität einer durch Verschweißen gesicherten Umreifung mit einem Umreifungsband aus Kunststoff sind bislang keine zufriedenstellenden Lösungen gefunden worden, egal ob es sich um ein Laser-, Reib- oder gewöhnliches Schweißverfahren mittels einer heißen Schweißzunge handelt, mit dem das Umreifungsband aus Kunststoff nach dem Festzurren gesichert wird.

Dabei hat sich herausgestellt, dass vor allem zu Beginn eines Umreifungsprozesses die erzielbare Qualität sehr stark von Umgebungsfaktoren, wie beispielsweise Umgebungstemperatur, Luftbewegung, Luftfeuchtigkeit abhängig ist, um nur einige Einflussfaktoren zu nennen.

Läuft ein Umreifungsprozess für längere Zeit, beispielsweise für eine halbe Stunde, verlieren die genannten Umgebungsfaktoren an Einfluss, bis sie nach etwas längerer Zeit nach Beginn des Umreifungsprozesses, beispielsweise nach einer Stunde, überhaupt keine Auswirkungen auf die erzielte Qualität mehr haben.

Ein Lösungsansatz, der bei ähnlich gearteten Problemen üblicherweise zum Erfolg führt, nämlich eine sensorgesteuerte Überwachung und Regelung aller Parameter eines Vorgangs, hier des Verschweißens während des Umreifungsprozesses, zu jedem infinitesimalen Zeitpunkt, scheitert vor allem an der zwischenzeitlich sehr hohen erzielten Taktung beim Umgang mit Artikeln und der hieraus resultierenden sehr kurzen Zeitspanne von nur wenigen Millisekunden, innerhalb welcher eine Umreifung vermittels eines Umreifungsbands aus Kunststoff durch Verschweißen gesichert wird, weil sich ein auszubildender Regelkreis als zu träge für Taktungen mit solch kurzen Zeitperioden herausstellt.

Der Erfindung liegt die Aufgabe zu Grunde, ein Verfahren sowie eine auch als Umreifungsvorrichtung bezeichnete Vorrichtung zur Verschweißung von Umreifungsbändern aus Kunststoff anzugeben, welche zu jedem Zeitpunkt eines Umreifungsprozesses, insbesondere zu Beginn eines Umreifungsprozesses, eine konstant hohe Qualität der zu erzielenden Verschweißung garantieren.

Die Aufgabe wird jeweils gelöst mit den Merkmalen der unabhängigen Ansprüche. Weitere vorteilhafte Ausgestaltungen werden durch die Unteransprüche beschrieben.

Ein erster Gegenstand der Erfindung betrifft demnach ein Verfahren zur Verschweißung von Umreifungsbändern aus Kunststoff. Das Verfahren sieht vor, überlappende Enden eines Umreifungsbands durch Verschweißen zu sichern, nachdem das Umreifungsband zunächst um mindestens zwei zuvor entsprechend einer gewünschten Anordnung innerhalb einer mit einer Umreifung zu versehenden Artikelgruppe zusammengestellte Artikel gelegt, gespannt, geklemmt sowie gegebenenfalls bereits abgeschnitten worden ist.

Das Umreifungsband wird mit Hilfe einer Umreifungsvorrichtung um die zu einer Artikelgruppe zusammengestellten Artikel gelegt, gespannt, gesichert und abgeschnitten.

Die Umreifungsvorrichtung umfasst zumindest:
- ein Bandführungselement, welches das zuvor um eine Artikelgruppe gelegte und gegebenenfalls gespannte Umreifungsband über dessen eigene Enden überlappend führt,
- eine beheizbare Schweißzunge, die zwischen einer Arbeitsposition, in welcher die heiße Schweißzunge zwischen die einander überlappenden Enden des zuvor um eine Artikelgruppe gelegten und gegebenenfalls gespannten Umreifungsbands ragt, um dieses anzuschmelzen, und einer Rückzugsposition, bei welcher die Schweißzunge zwischen den beiden überlappenden Enden des Umreifungsbands herausgezogen ist, beweglich angeordnet ist,
- eine Gegendruckplatte, und
- einen Stempel, der nach dem Zurückziehen der Schweißzunge aus deren Arbeitsposition in deren Rückzugsposition die beiden überlappenden Enden des Umreifungsbands gegen zumindest eine Partie der Gegendruckplatte und dabei gegeneinander presst und so die überlappenden Enden des angeschmolzenen Umreifungsbands miteinander verschweißt.

Das Verfahren sieht vor, spätestens und/oder zumindest zu Beginn eines Umreifungsprozesses zumindest:
- eine nach einem Zurückziehen der Schweißzunge dem Stempel gegenüberliegende Partie der Gegendruckplatte, und/oder
- einen der Gegendruckplatte zugewandten Teil des Stempels, und/oder
- einen der Schweißzunge, dem Stempel und der Gegendruckplatte zugewandten Bereich des Bandführungselements
zum Zwecke deren Vorheizung zu beheizen.

Zusätzlich kann das Verfahren vorsehen, die Schweißzunge vorzuheizen.

Das Verfahren kann demnach vorsehen, spätestens und/oder zumindest zu Beginn eines Umreifungsprozesses vorzugsweise sämtliche beim Verschweißen der beiden überlappenden Enden des Umreifungsbands durch Erhitzung mit diesen in Kontakt kommende und/oder stehende und/oder sich in deren Nähe befindliche Komponenten der Umreifungsvorrichtung vorzuheizen.

Damit kann es sich bei den vorzuheizenden Komponenten vorzugsweise zumindest um die Schweißzunge und/oder mit den einander überlappenden Enden des Umreifungsbands in Kontakt kommende Teile des Stempels und/oder zumindest die nach dem Zurückziehen der Schweißzunge dem Stempel gegenüberliegende Partie der Gegendruckplatte handeln.

Die Vorheizung spätestens und/oder zumindest zu Beginn eines Umreifungsprozesses der beim Verschweißen der beiden überlappenden Enden des Umreifungsbands durch Erhitzung mit diesen in Kontakt kommenden und/oder stehenden Komponenten der Umreifungsvorrichtung:
- dem Stempel gegenüberliegende Partie der Gegendruckplatte und/oder
- der Gegendruckplatte zugewandter Teil des Stempels und/oder
- zumindest der Schweißzunge, dem Stempel und der Gegendruckplatte zugewandter Bereich des Bandführungselements
kann durch von der Schweißzunge und/oder mindestens einem Heizelement ausgehende Wärmestrahlung, beispielsweise Infrarotstrahlung, und/oder durch Wärmeleitung, beispielsweise durch Kontakt mit der Schweißzunge und/oder in die Komponenten integrierte Heizelemente, und/oder ein Anpressen an die beheizbare Schweißzunge oder ein Anpressen der beheizbaren Schweißzunge erfolgen.

Die Vorheizung des der Gegendruckplatte zugewandten Teils des Stempels kann erfolgen, indem bei beheizter und/oder heißer Schweißzunge der Stempel vorzugsweise ohne dass sich ein Umreifungsband dazwischen befindet, gegen die Schweißzunge bewegt wird, so dass vorzugsweise Wärmeleitung zwischen der Schweißzunge und dem Stempel stattfindet.

Die Vorheizung der dem Stempel gegenüberliegenden Partie der Gegendruckplatte und/oder des zumindest der Schweißzunge, dem Stempel und der Gegendruckplatte zugewandten Bereichs des Bandführungselements kann erfolgen, indem die heiße Schweißzunge vorzugsweise ohne dass sich ein Umreifungsband zwischen ihr und der Gegendruckplatte befindet, eine Zeit lang der Gegendruckplatte gegenübergestellt ist, so dass Wärme von der Schweißzunge durch Wärmeübergang und Wärmestrahlung auf die Gegendruckplatte und/oder das Bandführungselement übertragen wird.

Alternativ oder zusätzlich kann die Vorheizung des der Gegendruckplatte zugewandten Teils des Stempels und die Vorheizung der dem Stempel gegenüberliegenden Partie der Gegendruckplatte erfolgen, indem bei beheizter und/oder heißer Schweißzunge der Stempel so stark gegen die Schweißzunge gepresst wird, dass diese auf ihrer dem Stempel abgewandten Seite an der Gegendruckplatte zum Anliegen kommt, wodurch Wärmeleitung zwischen der Schweißzunge und dem Stempel sowie zwischen der Schweißzunge und der Gegendruckplatte stattfindet.

Alternativ oder zusätzlich können der Stempel und/oder die Gegendruckplatte und/oder das Bandführungselement unabhängig von der Schweißzunge beheizbar sein, um diese zumindest vorzuheizen.

Darüber hinaus kann die Wärmeleitung in der Gegendruckplatte und/oder im Stempel und/oder im Bandführungselement unterbunden oder erschwert sein und/oder die Wärmekapazität zumindest der dem Stempel gegenüberliegenden Partie der Gegendruckplatte und/oder des der Gegendruckplatte zugewandten Teils des Stempels und/oder des Bandführungselements durch entsprechende Auswahl eines Werkstoffs mit geringer Wärmekapazität klein gehalten sein. Dadurch wird die Vor- und/oder Aufheizphase wesentlich beschleunigt.

Die Vorheizung spätestens und/oder zumindest zu Beginn eines Umreifungsprozesses erfolgt bevorzugt auf eine Temperatur, welche vorzugsweise derjenigen Temperatur entspricht, die diese Komponenten im laufenden Umreifungsprozess als stationäre Endtemperatur erreichen. Die Temperatur, auf der die Komponenten zumindest zu Beginn eines Umreifungsprozesses vorgeheizt werden, kann dadurch beeinflusst werden, indem das Aufheizen über eine vorher ermittelte begrenzte Zeitdauer vor und/oder zu Beginn eines Umreifungsprozesses erfolgt oder über einen Temperatursensor ermittelt wird, der dann bei Erreichen der gewünschten Temperatur die Vorheizung beendet und/oder den Umreifungsprozess startet.

Das Abschneiden des Umreifungsbands kann vor oder nach dem Verschweißen dessen bei fertig hergestellter Umreifung einander überlappender Enden erfolgen. Unter das Umreifungsband kann zur Schonung der Artikel ein Kantenschutz eingebracht werden. Vor und zumindest während des Verschweißens kann das gegebenenfalls gespannte Umreifungsband vermittels der Umreifungsvorrichtung geklemmt werden, um die gegebenenfalls aufgebrachte Spannung aufrecht zu erhalten sowie die Verschweißung bis zum Erreichen deren ausreichender Belastbarkeit zu entlasten.

Ein zweiter Gegenstand der Erfindung betrifft eine auch als Umreifungsvorrichtung bezeichnete Vorrichtung zur Verschweißung von Umreifungsbändern aus Kunststoff.

Mit Hilfe der Umreifungsvorrichtung kann das Umreifungsband um die zu einer Artikelgruppe zusammengestellten Artikel gelegt, gespannt, gesichert und abgeschnitten werden, wobei das Sichern durch die erwähnte Verschweißung erfolgt.

Die Umreifungsvorrichtung umfasst zumindest:
- ein Bandführungselement, welches das zuvor um eine Artikelgruppe gelegte und gegebenenfalls gespannte Umreifungsband über dessen eigene Enden überlappend führt,
- eine beheizbare Schweißzunge, die zwischen einer Arbeitsposition, in welcher die heiße Schweißzunge zwischen die einander überlappenden Enden des zuvor um die Artikelgruppe gelegten und gegebenenfalls gespannten Umreifungsbands ragt, um dieses anzuschmelzen, und einer Rückzugsposition, bei welcher die Schweißzunge zwischen den beiden überlappenden Enden des Umreifungsbands herausgezogen ist, beweglich angeordnet ist,
- eine Gegendruckplatte, und
- einen Stempel, der nach dem Zurückziehen der Schweißzunge aus deren Arbeitsposition in deren Rückzugsposition die beiden überlappenden Enden des Umreifungsbands gegen zumindest eine Partie der Gegendruckplatte und dabei gegeneinander presst und so die überlappenden Enden des angeschmolzenen Umreifungsbands miteinander verschweißt.

Die Umreifungsvorrichtung umfasst Mittel, um spätestens und/oder zumindest zu Beginn eines Umreifungsprozesses zumindest eine nach einem Zurückziehen der Schweißzunge dem Stempel gegenüberliegende Partie der Gegendruckplatte und/oder einen der Gegendruckplatte zugewandten Teil des Stempels und/oder zumindest einen der Schweißzunge, dem Stempel und der Gegendruckplatte zugewandten Bereich des Bandführungselements zum Zwecke einer Vorheizung zu beheizen.

Zusätzlich kann die Umreifungsvorrichtung Mittel zum Vorheizen der Schweißzunge umfassen. Bei den Mitteln zum Vorheizen der Schweißzunge kann es sich um einen Regelkreis handeln, der die Beheizung der Schweißzunge eine vorgegebene Zeitspanne vor Beginn eines Umreifungsprozesses startet.

Die Mittel, um spätestens und/oder zumindest zu Beginn eines Umreifungsprozesses zumindest die nach dem Zurückziehen der Schweißzunge dem Stempel gegenüberliegende Partie der Gegendruckplatte und/oder den der Gegendruckplatte zugewandten Teil des Stempels und/oder zumindest einen der Schweißzunge, dem Stempel und der Gegendruckplatte zugewandten Bereich des Bandführungselements vorzuheizen, können Steuermittel umfassen, welche bei beheizter und/oder heißer Schweißzunge vorzugsweise ohne dass sich ein Umreifungsband dazwischen befindet, den Stempel gegen die Schweißzunge bewegen, so dass vorzugsweise Wärmeleitung zwischen der Schweißzunge und dem Stempel stattfindet, wodurch der der Gegendruckplatte zugewandte Teil des Stempels vorgeheizt wird.

Die Mittel, um spätestens und/oder zumindest zu Beginn eines Umreifungsprozesses zumindest die nach dem Zurückziehen der Schweißzunge dem Stempel gegenüberliegende Partie der Gegendruckplatte und/oder den der Gegendruckplatte zugewandten Teil des Stempels und/oder zumindest einen der Schweißzunge, dem Stempel und der Gegendruckplatte zugewandten Bereich des Bandführungselements vorzuheizen, können Steuermittel umfassen, welche die heiße Schweißzunge vorzugsweise ohne dass sich ein Umreifungsband zwischen ihr und der Gegendruckplatte befindet, eine Zeit lang der Gegendruckplatte und/oder dem zumindest einen der Schweißzunge, dem Stempel und der Gegendruckplatte zugewandten Bereich des Bandführungselements gegenüberstellen, so dass Wärme von der Schweißzunge durch Wärmeübergang und Wärmestrahlung auf die dem Stempel gegenüberliegenden Partie der Gegendruckplatte und/oder auf zumindest einen der Schweißzunge, dem Stempel und der Gegendruckplatte zugewandten Bereich des Bandführungselements übertragen wird.

Die Steuermittel können zusätzlich den Stempel dazu veranlassen, bei beheizter und/oder heißer Schweißzunge diesen ohne dass sich ein Umreifungsband zwischen ihm und der Gegendruckplatte befindet, so stark gegen die Schweißzunge zu pressen, dass die Schweißzunge auf ihrer dem Stempel abgewandten Seite an der Gegendruckplatte zum Anliegen kommt, wodurch Wärmeleitung zwischen der Schweißzunge und dem Stempel sowie zwischen der Schweißzunge und der Gegendruckplatte stattfindet.

Alternativ oder zusätzlich kann die Umreifungsvorrichtung mindestens ein Heizelement zur Beheizung zumindest des der Gegendruckplatte zugewandten Teils des Stempels und/oder zumindest der dem Stempel gegenüberliegenden Partie der Gegendruckplatte und/oder zumindest eines der Schweißzunge, dem Stempel und der Gegendruckplatte zugewandten Bereichs des Bandführungselements umfassen. Durch eine Betätigung eines solchen Heizelements beispielsweise durch Beaufschlagung mit elektrischem Strom vor oder spätestens zu Beginn eines Umreifungsprozesses wird eine entsprechende Vorheizung erhalten.

Ein entsprechendes Heizelement kann in den Stempel und/oder in die Gegendruckplatte und/oder in das Bandführungselement integriert sein, oder in beispielsweise zumindest wärmeleitender Verbindung mit dem Stempel und/oder der Gegendruckplatte und/oder dem Bandführungselement stehen. Auch eine Übertragung von Wärme vermittels Wärmestrahlung von einem Heizelement auf eine oder mehrere zumindest zu Beginn eines Umreifungsprozesses vorzuheizende Komponenten kann vorgesehen sein, wobei ein hierfür vorgesehenes Heizelement vorzugsweise in Sichtverbindung zur zu beheizenden Komponente steht.

Dadurch können zumindest ein der Gegendruckplatte zugewandter Teil des Stempels und/oder zumindest eine dem Stempel gegenüberliegende Partie der Gegendruckplatte und/oder zumindest ein der Schweißzunge, dem Stempel und der Gegendruckplatte zugewandter Bereich des Bandführungselements unabhängig von der Schweißzunge zumindest vorgeheizt werden. In den Stempel und/oder in die Gegendruckplatte integrierte oder mit diesen in beispielsweise wärmeleitender Verbindung stehende Heizelemente ermöglichen es, zumindest den der Gegendruckplatte zugewandten Teil des Stempels sowie die dem Stempel gegenüberliegende Partie der Gegendruckplatte und zumindest einen der Schweißzunge, dem Stempel und der Gegendruckplatte zugewandten Bereich des Bandführungselements zumindest vorzuheizen, wobei alle beim Verschweißen der beiden überlappenden Enden des Umreifungsbands durch Erhitzung mit diesen in Kontakt kommende und/oder stehende Komponenten der Umreifungsvorrichtung in einer Ruheposition verbleiben. Alternativ genügt ein solches Heizelement, um ohne die Schweißzunge zu benötigen, vermittels Wärmeleitung zumindest den der Gegendruckplatte zugewandten Teil des Stempels sowie die dem Stempel gegenüberliegende Partie der Gegendruckplatte und vermittels Wärmestrahlung auch zumindest einen der Schweißzunge, dem Stempel und der Gegendruckplatte zugewandten Bereich des Bandführungselements zumindest vorzuheizen, indem der Stempel, bei eingeschaltetem Heizelement und ohne dass sich ein Umreifungsband zwischen ihm und der Gegendruckplatte befindet, gegen die Gegendruckplatte gepresst wird, so dass Wärmeleitung zwischen dem Stempel und der Gegendruckplatte stattfindet, von denen z.B. nur der Stempel oder die Gegendruckplatte mit einem Heizelement versehen oder verbunden sein können.

Die Einschränkung zumindest vorzuheizen ist hierbei so zu verstehen, dass zusätzlich beispielsweise nach Beginn eines Umreifungsprozesses, etwa für eine begrenzte Zeitdauer, die entsprechenden Komponenten weiter beheizt werden können.

Das mindestens eine Heizelement kann durch Steuermittel gesteuert sein, welche vor Beginn eines Umreifungsprozesses das Heizelement einschalten und/oder den Stempel veranlassen, gegen die Schweißzunge und/oder die Gegendruckplatte zu fahren.

Um die Qualität der Schweißverbindung bei der Umreifung beeinträchtigende Wärmeverluste insbesondere zu Beginn eines Umreifungsprozesses so gering als möglich zu halten, kann vorgesehen sein, dass zumindest die dem Stempel gegenüberliegende Partie der Gegendruckplatte und/oder der der Gegendruckplatte zugewandte Teil des Stempels, und/oder der der Schweißzunge, dem Stempel und der Gegendruckplatte zugewandte Bereich des Bandführungselements aus einem schlecht wärmeleitenden Material und/oder einem Material mit geringer Wärmekapazität hergestellt ist. Alternativ oder zusätzlich kann vorgesehen sein, zumindest die dem Stempel gegenüberliegende Partie der Gegendruckplatte gegenüber sich an die Gegendruckplatte anschließenden Elementen der Umreifungsvorrichtung wärmetechnisch zu isolieren, beispielsweise durch Wärmedämmmittel.

Alternativ oder zusätzlich kann vorgesehen sein, zumindest den der Gegendruckplatte zugewandten Teil des Stempels gegenüber sich an den Stempel anschließenden Elementen der Umreifungsvorrichtung wärmetechnisch zu isolieren, beispielsweise durch Wärmedämmmittel.

Ferner kann vorgesehen sein, zumindest einen der Schweißzunge, dem Stempel und der Gegendruckplatte zugewandten Bereich des Bandführungselements von einem verbleibenden Bereich des Bandführungselements wärmetechnisch zu isolieren.

Die Gegendruckplatte und/oder der Stempel und/oder das Bandführungselement können alternativ oder zusätzlich mit einer oder mehreren auch als Wärmegrenze, Wärmesperre oder als Wärmegap bezeichenbaren Wärmebreschen hergestellt sein, so dass die Wärmeleitung in der Gegendruckplatte und/oder im Stempel und/oder im Bandführungselement erschwert ist. Hierdurch wird der Temperaturaufbau zu Beginn eines Umreifungsprozesses beschleunigt, wodurch gegebenenfalls auf ein Vorheizen zumindest vor Beginn eines Umreifungsprozesses verzichtet werden kann.

Die mindestens eine Wärmebresche verhindert oder unterbindet die Wärmeleitung von:
- der dem Stempel gegenüberliegenden Partie der Gegendruckplatte zu mindestens einer sich hieran anschließenden weiteren Partie der Gegendruckplatte und/oder einem sich hieran anschließenden Element der Umreifungsvorrichtung, und/oder
- dem der Gegendruckplatte zugewandten Teil des Stempels zu mindestens einem sich hieran anschließenden weiteren Teil des Stempels und/oder einem sich hieran anschließenden Element der Umreifungsvorrichtung,
- einem der Schweißzunge, dem Stempel und der Gegendruckplatte zugewandten Bereich des Bandführungselements zu mindestens einem verbleibenden Bereich des Bandführungselements und/oder einem sich hieran anschließenden Element der Umreifungsvorrichtung,
oder grenzt die Wärmeleitung zumindest auf ein für die gleichbleibende Qualität der Herstellung einer Schweißverbindung zumindest zu Beginn des Umreifungsprozesses unschädliches Maß ein.

Die eine oder mehreren Wärmebreschen unterteilen die Gegendruckplatte und/oder den Stempel und/oder das Bandführungselement in zumindest zu Beginn des Umreifungsprozesses kühle oder kalte Partien und z.B. warme oder heiße Partien mit hohem Wärmeeintrag durch:
- den unmittelbaren Kontakt mit den durch die Schweißzunge erhitzten, einander überlappenden Enden des Umreifungsbands (Gegendruckplatte und Stempel) bzw.
- die aufgrund der Sichtverbindung unmittelbare Wärmestrahlung ausgehend von den durch die Schweißzunge erhitzten, einander überlappenden Enden des Umreifungsbands (Bandführungselement).

Die mindestens eine Wärmebresche erstreckt sich zumindest abschnittsweise bevorzugt beispielsweise von mindestens einer ersten Oberfläche der Gegendruckplatte und/oder des Stempels und/oder des Bandführungselements zu mindestens einer beispielsweise gegenüberliegenden zweiten Oberfläche der Gegendruckplatte und/oder des Stempels und/oder des Bandführungselements durch die Gegendruckplatte und/oder den Stempel und/oder das Bandführungselement hindurch.

Im einfachsten Fall kann die Wärmebresche durch einen oder mehrere Schlitze bzw. Schlitzungen verwirklicht sein. Hierdurch wird der wärmeleitende Querschnitt der Gegendruckplatte und/oder des Stempels und/oder des Bandführungselements zwischen den Partien verringert, wodurch der Wärmeeintrag von der warmen oder heißen Partie in die kalte Partie begrenzt wird. Der mindestens eine Schlitz bzw. die mindestens eine Schlitzung erstreckt sich vorzugsweise durch die Gegendruckplatte und/oder den Stempel und/oder das Bandführungselement hindurch. Beispielsweise kann ein Schlitz oder eine Schlitzung eine beispielsweise von einem Rand und/oder von einer Oberfläche der Gegendruckplatte und/oder des Stempels und/oder des Bandführungselements her verlaufende, z.B. eingeschnittene Nut sein. Alternativ ist denkbar, dass ein Schlitz oder eine Schlitzung ein Loch in der Gegendruckplatte und/oder im Stempel und/oder im Bandführungselement bildet. Beispiele für von einem Schlitz oder einer Schlitzung gebildete Löcher sind in ihrem Querschnitt kreisrunde oder ovale oder längliche oder eckige oder einen beliebigen Querschnitt aufweisende, symmetrische oder asymmetrische Durchgangslöcher oder Sacklöcher, deren Mittelpunkte aufeinander folgender Querschnitte entlang einer senkrecht oder schräg zur Oberfläche der Gegendruckplatte und/oder des Stempels verlaufenden Gerade oder entlang einer beliebigen Kurve liegen.

Die Wärmebresche bildet in ihrer Verwirklichung als Schlitz oder Schlitzung einen die Wärmeleitung unterbrechenden Ausschnitt bzw. eine Aussparung bzw. eine für die Wärmeleitung unüberwindliche Kluft oder Leerstelle, in Form eines Abstands zwischen der mindestens einen warmen oder heißen Partie und der mindestens einen kalten Partie.

Ebenfalls ist denkbar, zusätzlich zu oder anstelle eines Schlitzes oder einer Schlitzung ein die Wärmeleitung unterbindendes oder zumindest einschränkendes Material als Wärmebresche in die Gegendruckplatte und/oder den Stempel und/oder das Bandführungselement eingebracht ist.

Die Umreifungsvorrichtung kann außerdem eine Klemmvorrichtung umfassen, um das gegebenenfalls gespannte Umreifungsband zu halten und um die gegebenenfalls aufgebrachte Spannung aufrecht zu erhalten sowie die Verschweißung bis zum Erreichen deren ausreichender Belastbarkeit zu entlasten.

Die beschriebenen Umreifungsvorrichtungen sind zur Durchführung eines zuvor beschriebenen Verfahrens geeignet.

Wichtig ist hervorzuheben, dass sowohl beim Verfahren, als auch bei der Vorrichtung mehrere Stempel sowie gegebenenfalls auch mehrere Gegendruckplatten oder mehrere Partien der Gegendruckplatte vorgesehen sein können, welche bei mehreren Stempeln diesen gegenüberliegen. Für derart mehrere Stempel oder Teile eines Stempels, welche mehreren Partien einer oder mehrerer Gegendruckplatten gegenüberliegen, gilt dabei wenigstens hinsichtlich der Vorheizung jeweils das zuvor gesagte. Darüber hinaus setzt der Ausdruck überlappender Enden des Umreifungsbands nicht voraus, dass das Umreifungsband bereits abgelängt ist, bevor es um eine Artikelgruppe gelegt und gegebenenfalls gespannt wird und/oder bevor es zur Sicherung mit sich selbst verschweißt ist. Der verwendete Ausdruck überlappender Enden des Umreifungsbands dient lediglich zur Veranschaulichung, wo bei fertiger Umreifung die Verschweißung ausgebildet ist. Die verwendete Formulierung schließt damit im Sinne der Erfindung auch einen Umreifungsvorgang ein, bei dem zunächst das Umreifungsband um eine zu umreifende Artikelgruppe gelegt und gegebenenfalls gespannt wird, wobei das noch nicht abgeschnittene Umreifungsband über sein bei einer vorangehenden Umreifung abgeschnittenes Ende geführt wird, dann im überlappenden Bereich durch Verschweißen gesichert und erst im Anschluss hieran abgeschnitten wird.

Vorteile gegenüber dem Stand der Technik bestehen unter anderem darin, dass durch das Vorheizen von beim Verschweißen einander überlappender Enden eines Umreifungsbands durch Erhitzung mit diesen in Kontakt kommender und/oder stehender Komponenten einer Umreifungsvorrichtung und/oder durch eine wärmetechnische Isolation dieser Komponenten vor allem vor und/oder zu Beginn eines Umreifungsprozesses eine bessere Qualität erreicht werden kann. Demgegenüber kann es bei bekannten Verfahren gemäß Stand der Technik zu Prozessungenauigkeiten und Schwankungen von Prozessparametern, bspw. aufgrund von einwirkender Zugluft, kalter Umgebung, Problemen beim Prozessstart etc. zu Qualitätsschwankungen und teilweise zu schlechten Prozessqualitäten kommen; dies macht sich meist allgemein in einer uneinheitlichen Qualität bemerkbar.

Durch das Erwärmen der zur Verschweißung erforderlichen Komponenten einer Umreifungsvorrichtung zu Zwecken derer Vorheizung werden Wärmeverluste von der beheizbaren Schweißzunge und dem Umreifungsband auf die angrenzenden Komponenten der Umreifungsvorrichtung verringert, so dass die Bedingungen zum Verweißen gleichbleibend sind und die Qualität der Verschweißung verbessert wird. Durch eine geeignete Materialwahl werden außerdem die Wärmeverluste des Umreifungsbands und der Schweißzunge verringert. Auch dadurch werden gleichbleibende Bedingungen erzielt, welche die Qualität der Verschweißung im Vergleich zum Stand der Technik verbessern.

Beim Stand der Technik wird vor Beginn eines Umreifungsprozesses nur die Schweißzunge vorgeheizt bzw. auf eine Temperatur oberhalb des Schmelzpunkts des für das Umreifungsband verwendeten Kunststoffs erwärmt. Dadurch ergibt sich bei den ersten Verschweißungen ein erhöhter Wärmeübergang von der Schweißzunge über das anzuschmelzende Umreifungsband auf die angrenzenden Komponenten Gegendruckplatte, Stempel und Bandführung, da diese Komponenten Umgebungstemperatur haben. Dies führt dazu, dass bei den ersten Verschweißungen die Qualität der Verschweißung stark schwankt. Dadurch platzt die Verschweißung beispielsweise bei vorgespannten Umreifungsbändern auf. Auch das Erreichen von erforderlichen konstanten Kräften zum Öffnen der Verschweißung ist nicht möglich. Erst bei Erreichen einer gewissen Betriebstemperatur der an den Ort, an dem das Verschweißen stattfindet, angrenzenden Komponenten, ist es durch einen geringen Wärmeübergang möglich, eine gleichbleibende Qualität der Verschweißungen zu erreichen.

Die Erfindung schafft somit zu jedem Zeitpunkt konstante Bedingungen und damit konstante Verhältnisse der beim Verschweißen einander überlappender Enden eines Umreifungsbands durch Erhitzung mit diesen in Kontakt kommender und/oder stehender Komponenten und somit auch der gesamten Umreifungsvorrichtung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in der Figur dargestellt, die für die Beschreibung der Figur erforderlich sind. Die dargestellte Ausführungsform stellt lediglich Beispiele dar, wie die erfindungsgemäße Vorrichtung oder das erfindungsgemäße Verfahren ausgestaltet sein können und stellt keine abschließende Begrenzung dar.

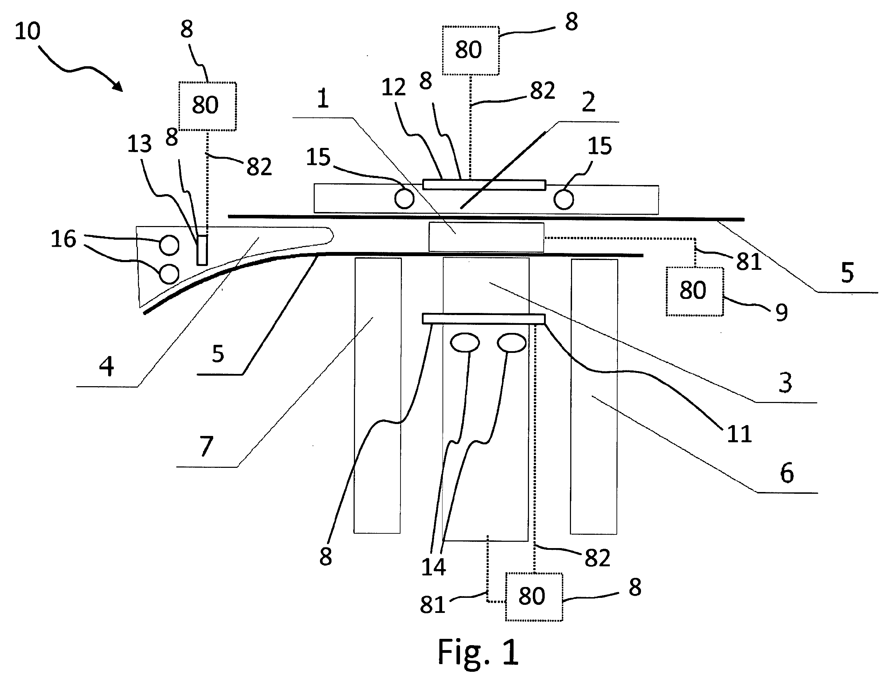

Die einzige Figur 1 zeigt in schematischer Darstellung eine auch als Umreifungsvorrichtung bezeichnete Vorrichtung zur Verschweißung von Umreifungsbändern aus Kunststoff.

Zum Umreifen von Artikeln, wie beispielsweise Packgütern, Zeitschriften, Magazinen und geschlossenen Behälten, werden diese mit einem Umreifungsband aus Kunststoff umreift. Je nach Art des zu umreifenden Gutes wird das Umreifungsband stärker oder schwächer gespannt. Zu Verschweißen des Umreifungsbands 5 wird zu Beginn der Produktion bzw. des Umreifungsprozesses eine beheizbare Schweißzunge 1 einer Vorrichtung 10 zum Verschweißen von Umreifungsbändern 5 aus Kunststoff auf die nötige Schweißtemperatur aufgeheizt. Ist diese Temperatur erreicht, wird das sich überlappende Umreifungsband 5 in der auch als Umreifungsvorrichtung bezeichneten Vorrichtung 10 zum Verschweißen von Umreifungsbändern 5 aus Kunststoff verschweißt und geschnitten. Diese Vorrichtung 10 besteht aus einer Bandführung 4, in der das Umreifungsband 5 geführt wird, einer beheizbaren Schweißzunge 1, welche zum Anschmelzen zwischen das sich überlappende Umreifungsband 5 gebracht wird, einem oder mehreren Stempeln 3, die während des Anschmelzens des Umreifungsbands 5 das Umreifungsband 5 gegen die beheizbare Schweißzunge 1 pressen können, und, nachdem die beheizbare Schweißzunge 1 zwischen dem überlappenden Umreifungsband 5 entfernt ist, dies gegen eine Gegendruckplatte 2 pressen, wodurch eine Sicherung des Umreifungsbands 5 durch Verschweißen dessen überlappender Enden erfolgt. Im Anschluss hieran oder bereits zuvor wird das Umreifungsband 5 abgeschnitten.

Eine Vorrichtung 10 zur Verschweißung von Umreifungsbändern 5 aus Kunststoff umfasst damit zumindest:
- wenigstens ein Bandführungselement 4, welches das zuvor um eine Artikelgruppe gelegte und gegebenenfalls gespannte Umreifungsband 5 über dessen eigene Enden überlappend führt,
- mindestens eine beheizbare Schweißzunge 1, die zwischen einer Arbeitsposition, in welcher die heiße Schweißzunge 1 zwischen die einander überlappenden Enden des zuvor um die Artikelgruppe gelegten und gegebenenfalls gespannten Umreifungsbands 5 ragt, um dieses anzuschmelzen, und einer Rückzugsposition, bei welcher die Schweißzunge 1 zwischen den beiden überlappenden Enden des Umreifungsbands 5 herausgezogen ist, beweglich angeordnet ist,
- zumindest eine Gegendruckplatte 2, und
- mindestens einen Stempel 3, der nach dem Zurückziehen der Schweißzunge 1 aus deren Arbeitsposition in deren Rückzugsposition die beiden überlappenden Enden des Umreifungsbands 5 gegen zumindest eine Partie der Gegendruckplatte 2 und dabei gegeneinander presst und so die überlappenden Enden des angeschmolzenen Umreifungsbands 5 miteinander verschweißt.

Wichtig ist hervorzuheben, dass - wie schon aus der vorangehenden Beschreibung hervorgeht - der Ausdruck überlappender Enden des Umreifungsbands 5 nicht voraussetzt, dass das Umreifungsband 5 bereits abgelängt ist, bevor es um eine Artikelgruppe gelegt und gegebenenfalls gespannt wird und/oder bevor es zur Sicherung mit sich selbst verschweißt wird. Der verwendete Ausdruck überlappender Enden des Umreifungsbands 5 dient vielmehr einer Veranschaulichung, wo bei fertig hergestellter Umreifung die Verschweißung ausgebildet ist.

Die Vorrichtung 10 zum Verschweißen von Umreifungsbändern 5 aus Kunststoff kann darüber hinaus eine Klemmvorrichtung für das sich überlappende Umreifungsband 5, bestehend aus Klemmbacken 6, 7, die gegen die Gegendruckplatte 2 bewegt werden können, um die überlappenden Enden des Umrefungsbands 5 zwischen ihnen und der Gegendruckplatte 2 zumindest für die Dauer des Verschweißens der überlappenden Enden zu klemmen. Die Klemmbacken 6, 7 pressen dabei vorzugsweise gegen andere Partien der Gegendruckplatte 2, als der Stempel 3, oder sie können alternativ gegen eine weitere, gemeinsame oder gegen jeweils weitere, eigene Gegendruckplatten pressen.

Die Vorrichtung 10 zeichnet sich durch Mittel 8 aus, um spätestens und/oder zumindest zu Beginn eines Umreifungsprozesses zumindest:
- eine dem Stempel 3 gegenüberliegende Partie der Gegendruckplatte 2, und/oder
- einen der Gegendruckplatte 2 zugewandten Teil des Stempels 3, und/oder
- einen der Schweißzunge 1, dem Stempel 3 und der Gegendruckplatte 3 zugewandten Bereich des Bandführungselements 4
vorzuheizen.

Die Vorrichtung 10 kann zusätzlich Mittel 9 zum Vorheizen der Schweißzunge 1 umfassen. Bei den Mitteln 9 zum Vorheizen der Schweißzunge 1 kann es sich um einen Regelkreis handeln, der die Beheizung der Schweißzunge 1 eine vorgegebene Zeitspanne vor Beginn eines Umreifungsprozesses startet.

Die Mittel 8, um spätestens und/oder zumindest zu Beginn eines Umreifungsprozesses zumindest:
- eine dem Stempel 3 gegenüberliegende Partie der Gegendruckplatte 2, und/oder
- einen der Gegendruckplatte 2 zugewandten Teil des Stempels 3, und/oder
- einen der Schweißzunge 1, dem Stempel 3 und der Gegendruckplatte 2 zugewandten Bereich des Bandführungselements 4
vorzuheizen, können Steuermittel 80 umfassen, welche:
- bei beheizter und/oder heißer Schweißzunge 1 vorzugsweise ohne dass sich ein Umreifungsband 5 dazwischen befindet, den Stempel 3 gegen die Schweißzunge 1 bewegen, so dass vorzugsweise Wärmeleitung zwischen der Schweißzunge 1 und dem Stempel 3 stattfindet, wodurch der der Gegendruckplatte 2 zugewandte Teil des Stempels 3 vorgeheizt wird, und/oder
- die heiße Schweißzunge 1 vorzugsweise ohne dass sich ein Umreifungsband 5 zwischen ihr und der Gegendruckplatte 2 befindet, wenigstens für eine vorgebbare Zeitdauer der Gegendruckplatte 2 und/oder dem zumindest einen der Schweißzunge 1, dem Stempel 3 und der Gegendruckplatte 2 zugewandten Bereich des Bandführungselements 4 gegenüberstellen, so dass Wärme von der Schweißzunge 1 durch Wärmeübergang und Wärmestrahlung auf die dem Stempel 3 gegenüberliegenden Partie der Gegendruckplatte 2 und/oder auf zumindest einen der Schweißzunge 1, dem Stempel 3 und der Gegendruckplatte 2 zugewandten Bereich des Bandführungselements 4 übertragen wird, und/oder
- den Stempel 3 dazu veranlassen, bei beheizter und/oder heißer Schweißzunge 1 diesen ohne dass sich ein Umreifungsband 5 zwischen ihm und der Gegendruckplatte 2 befindet, so stark gegen die Schweißzunge 1 zu pressen, dass die Schweißzunge 1 auf ihrer dem Stempel 3 abgewandten Seite an der Gegendruckplatte 2 zum Anliegen kommt, wodurch Wärmeleitung zwischen der Schweißzunge 1 und dem Stempel 3 sowie zwischen der Schweißzunge 1 und der Gegendruckplatte 2 stattfindet.

Die Vorrichtung 10 kann:
- mindestens ein Heizelement 11 zur Beheizung zumindest des der Gegendruckplatte 2 zugewandten Teils des Stempels 3, und/oder
- mindestens ein Heizelement 12 zur Beheizung zumindest der dem Stempel 3 gegenüberliegenden Partie der Gegendruckplatte 2, und/oder
- mindestens ein Heizelement 13 zur Beheizung zumindest eines der Schweißzunge 1, dem Stempel 3 und der Gegendruckplatte 2 zugewandten Bereichs des Bandführungselements 4
umfassen. Durch eine Betätigung eines solchen Heizelements 11, 12, 13 beispielsweise durch Beaufschlagung mit elektrischem Strom vor oder spätestens zu Beginn eines Umreifungsprozesses wird eine entsprechende Vorheizung erhalten.

Ein entsprechendes Heizelement 11, 12, 13 kann in den Stempel 3 und/oder in die Gegendruckplatte 2 und/oder in das Bandführungselement 4 integriert sein, oder in beispielsweise zumindest wärmeleitender Verbindung mit dem Stempel 3 und/oder der Gegendruckplatte 2 und/oder dem Bandführungselement 4 stehen. Auch eine Übertragung von Wärme vermittels Wärmestrahlung von einem Heizelement 11, 12, 13 auf eine oder mehrere zumindest zu Beginn eines Umreifungsprozesses vorzuheizende Komponenten kann vorgesehen sein, wobei ein hierfür vorgesehenes Heizelement 11, 12, 13 vorzugsweise in Sichtverbindung zur zu beheizenden Komponente steht.

Ein oder mehrere entsprechende Heizelemente 11, 12, 13 können demnach Teil der Mittel 8 sein, um spätestens und/oder zumindest zu Beginn eines Umreifungsprozesses zumindest:
- eine dem Stempel 3 gegenüberliegende Partie der Gegendruckplatte 2, und/oder
- einen der Gegendruckplatte 2 zugewandten Teil des Stempels 3, und/oder
- einen der Schweißzunge 1, dem Stempel 3 und der Gegendruckplatte 2 zugewandten Bereich des Bandführungselements 4
vorzuheizen. Das mindestens eine Heizelement 11, 12, 13 kann durch Steuermittel 80 gesteuert sein, welche vor Beginn eines Umreifungsprozesses das Heizelement 11, 12, 13 einschalten und/oder den Stempel 3 veranlassen, gegen die Schweißzunge 1 und/oder die Gegendruckplatte 2 zu fahren. Demnach kann wenigstens ein solches Heizelement 11, 12, 13 beispielsweise von einem Steuermittel 80 gesteuert ein- und ausgeschaltet werden, das zugleich zu Zwecken einer Vorheizung eine Bewegung beispielsweise des Stempels 3 und/oder der Schweißzunge 1 steuert.

Solche bewegungssteuernden Maßnahmen, um spätestens und/oder zumindest zu Beginn eines Umreifungsprozesses zumindest:
- eine dem Stempel 3 gegenüberliegende Partie der Gegendruckplatte 2, und/oder
- einen der Gegendruckplatte 2 zugewandten Teil des Stempels 3, und/oder
- einen der Schweißzunge 1, dem Stempel 3 und der Gegendruckplatte 3 zugewandten Bereich des Bandführungselements 4
vorzuheizen, sind durch gestrichelte Verbindungslinien 81 zwischen Steuermitteln 80 und der Schweißzunge 1 sowie zwischen Steuermitteln 80 und dem Stempel 3 angedeutet, wohingegen Maßnahmen, welche ein Vorheizen mittels eines Heizelements betreffen, durch gestrichelte Verbindungslinien 82 zwischen Steuermitteln 80 und den Heizelementen 11, 12, 13 angedeutet sind.

Dadurch können zumindest ein der Gegendruckplatte 2 zugewandter Teil des Stempels 3 und/oder zumindest eine dem Stempel 3 gegenüberliegende Partie der Gegendruckplatte 2 und/oder zumindest ein der Schweißzunge 1, dem Stempel 3 und der Gegendruckplatte 2 zugewandter Bereich des Bandführungselements 4 unabhängig von der Schweißzunge 1 zumindest vorgeheizt werden. In den Stempel 3 und/oder in die Gegendruckplatte 2 integrierte oder mit diesen in beispielsweise wärmeleitender Verbindung stehende Heizelemente 11, 12 ermöglichen es, zumindest den der Gegendruckplatte 2 zugewandte Teil des Stempels 3 sowie die dem Stempel 3 gegenüberliegende Partie der Gegendruckplatte 2 und zumindest einen der Schweißzunge 1, dem Stempel 3 und der Gegendruckplatte 2 zugewandten Bereich des Bandführungselements 4 zumindest vorzuheizen, wobei alle beim Verschweißen der beiden überlappenden Enden des Umreifungsbands 5 durch Erhitzung mit diesen in Kontakt kommende und/oder stehende Komponenten der Vorrichtung 10 in einer Ruheposition verbleiben. Hierbei wird ein der Schweißzunge 1, dem Stempel 3 und der Gegendruckplatte 2 zugewandter Bereich des Bandführungselements 4 durch Wärmestrahlung ausgehend wenigstens von dem der Gegendruckplatte 2 zugewandten Teil des Stempels 3 sowie der dem Stempel 3 gegenüberliegenden Partie der Gegendruckplatte 2 vorgeheizt. Die Schweißzunge 1 kann bei entsprechender Vorheizung ebenfalls einen Teil zu einer entsprechenden Wärmestrahlung beitragen.

Alternativ genügt ein Heizelement 11, 12, um ohne die Schweißzunge 1 zu benötigen, vermittels Wärmeleitung zumindest den der Gegendruckplatte 2 zugewandten Teil des Stempels 3 sowie die dem Stempel 3 gegenüberliegende Partie der Gegendruckplatte 2 und vermittels Wärmestrahlung auch zumindest einen der Schweißzunge 1, dem Stempel 3 und der Gegendruckplatte 2 zugewandten Bereich des Bandführungselements 4 zumindest vorzuheizen, indem der Stempel 3, bei eingeschaltetem Heizelement 11 oder 12 und ohne dass sich ein Umreifungsband 5 zwischen ihm und der Gegendruckplatte 2 befindet, gegen die Gegendruckplatte 2 gepresst wird, so dass es zu Wärmeleitung zwischen dem Stempel 3 und der Gegendruckplatte 2 kommt, von denen z.B. nur der Stempel 3 oder die Gegendruckplatte 2 mit einem Heizelement 11 bzw. 12 versehen oder verbunden sein können. In diesem Fall veranlassen beispielsweise Steuermittel 80 die Schweißzunge 1 während des Vorheizens sich in deren Rückzugsposition zurückzuziehen.

Die Einschränkung zumindest vorzuheizen ist hierbei so zu versehen, dass zusätzlich beispielsweise nach Beginn eines Umreifungsprozesses, etwa für eine begrenzte Zeitdauer, die entsprechenden Komponenten weiter beheizt werden können.

Vorteilhaft können die Mittel 9 zum Vorheizen der Schweißzunge 1 beispielsweise ebenfalls von einem Steuermittel 80 umfasst sein.

Zumindest:
- die dem Stempel 3 gegenüberliegende Partie der Gegendruckplatte 2, und/oder
- der der Gegendruckplatte 2 zugewandte Teil des Stempels 3, und/oder
- der der Schweißzunge 1, dem Stempel 3 und der Gegendruckplatte 2 zugewandte Bereich des Bandführungselements 4
kann aus einem schlecht wärmeleitenden Material und/oder einem Material mit geringer Wärmekapazität hergestellt sein. Ferner kann alternativ oder zusätzlich zumindest:
- die dem Stempel 3 gegenüberliegende Partie der Gegendruckplatte 2 gegenüber sich an die Gegendruckplatte 2 anschließende Elemente der Vorrichtung 10, und/oder
- der der Gegendruckplatte 2 zugewandte Teil des Stempels 3 gegenüber sich an den Stempel 3 anschließende Elementen der Vorrichtung 10, und/oder
- den der Schweißzunge 1, dem Stempel 3 und der Gegendruckplatte 2 zugewandten Bereich des Bandführungselements 4 von einem verbleibenden Bereich des Bandführungselements 4 und/oder sich an das Bandführungselement 4 anschließende Elementen der Vorrichtung 10
wärmetechnisch isoliert sein, beispielsweise durch Wärmedämmmittel. Darüber hinaus ist alternativ oder zusätzlich denkbar, dass
- die Gegendruckplatte 2, und/oder
- der Stempel 3, und/oder
- das Bandführungselement 4
mit einer oder mehreren auch als Wärmegrenze, Wärmesperre oder als Wärmegap bezeichenbaren Wärmebreschen 14, 15, 16 hergestellt sind, so dass die Wärmeleitung in der Gegendruckplatte 2 und/oder im Stempel 3 und/oder im Bandführungselement 4 erschwert ist. Hierdurch wird der Temperaturaufbau zu Beginn eines Umreifungsprozesses beschleunigt, wodurch gegebenenfalls auf ein Vorheizen zumindest vor Beginn eines Umreifungsprozesses verzichtet werden kann.

Durch die beschriebenen Maßnahmen werden die Qualität der Schweißverbindung bei der Umreifung beeinträchtigende Wärmeverluste insbesondere zu Beginn eines Umreifungsprozesses so gering als möglich gehalten.

Die beschriebenen, auch als Umreifungsvorrichtungen bezeichenbaren Vorrichtungen 10 sind geeignet, ein Verfahren zur Verschweißung von Umreifungsbändern 5 aus Kunststoff mit Hilfe einer solchen Umreifungsvorrichtung durchzuführen.

Ein solches Verfahren zeichnet sich dadurch aus, dass spätestens und/oder zumindest zu Beginn eines Umreifungsprozesses zumindest:
- eine dem Stempel 3 gegenüberliegende Partie der Gegendruckplatte 2, und/oder
- ein der Gegendruckplatte 2 zugewandter Teil des Stempels 3, und/oder
- ein der Schweißzunge 1, dem Stempel 3 und der Gegendruckplatte 2 zugewandter Bereich des Bandführungselements 4
vorgeheizt wird.

Das Verfahren kann zusätzlich vorsehen, die Schweißzunge 1 vorzuheizen.

Das Verfahren kann demnach vorsehen, spätestens und/oder zumindest zu Beginn eines Umreifungsprozesses vorzugsweise sämtliche beim Verschweißen der beiden überlappenden Enden des Umreifungsbands 5 durch Erhitzung mit diesen in Kontakt kommende und/oder stehende Komponenten einer Vorrichtung 10 vorzuheizen.

Damit kann es sich bei den vorzuheizenden Komponenten vorzugsweise zumindest um die Schweißzunge 1 und/oder mit den einander überlappenden Enden des Umreifungsbands 5 in Kontakt kommende Teile des Stempels 3 und/oder zumindest die nach dem Zurückziehen der Schweißzunge 1 dem Stempel 3 gegenüberliegende Partie der Gegendruckplatte 2 und/oder um einen der Schweißzunge 1, dem Stempel 3 und der Gegendruckplatte 2 zugewandten Bereich des Bandführungselements 4 handeln.

Gemäß einer bevorzugten Weiterbildung des Verfahrens kann vorgesehen sein, dass die Vorheizung spätestens und/oder zumindest zu Beginn eines Umreifungsprozesses der beim Verschweißen der beiden überlappenden Enden des Umreifungsbands 5 durch Erhitzung mit diesen in Kontakt kommenden und/oder stehenden Komponenten der Vorrichtung 10:
- dem Stempel 3 gegenüberliegende Partie der Gegendruckplatte 2 und/oder
- der Gegendruckplatte 2 zugewandter Teil des Stempels 3 und/oder
- zumindest der Schweißzunge 1, dem Stempel 3 und der Gegendruckplatte 2 zugewandter Bereich des Bandführungselements 4
durch von der Schweißzunge 1 und/oder mindestens einem Heizelement 11, 12, 13 ausgehende Wärmestrahlung, beispielsweise Infrarotstrahlung, und/oder durch Wärmeleitung, beispielsweise durch Kontakt mit der Schweißzunge 1 und/oder in die Komponenten integrierte Heizelemente 11, 12, 13 und/oder ein Anpressen an die oder der beheizbaren Schweißzunge 1 erfolgt.

Das Verfahren kann vorsehen, dass die Vorheizung des der Gegendruckplatte 2 zugewandten Teils des Stempels 3 erfolgt, indem bei beheizter und/oder heißer Schweißzunge 1 der Stempel 3 vorzugsweise ohne dass sich ein Umreifungsband 5 dazwischen befindet, gegen die Schweißzunge 1 bewegt wird, so dass vorzugsweise Wärmeleitung zwischen der Schweißzunge 1 und dem Stempel 3 stattfindet. Zusätzlich kann das Verfahren vorsehen, dass der Stempel 3 so stark gegen die Schweißzunge 1 gepresst wird, dass diese auf ihrer dem Stempel 3 abgewandten Seite an der Gegendruckplatte 2 zum Anliegen kommt, wodurch Wärmeleitung zwischen der Schweißzunge 1 und dem Stempel 3 sowie zwischen der Schweißzunge 1 und der Gegendruckplatte 2 stattfindet.

Eine weitere Möglichkeit zur Vorheizung der dem Stempel 3 gegenüberliegenden Partie der Gegendruckplatte 2 und/oder des zumindest der Schweißzunge 1, dem Stempel 3 und der Gegendruckplatte 2 zugewandten Bereichs des Bandführungselements 4 besteht gemäß dem Verfahren darin, dass die heiße Schweißzunge 1 vorzugsweise ohne dass sich ein Umreifungsband 5 zwischen ihr und der Gegendruckplatte 2 befindet, eine Zeit lang der Gegendruckplatte 2 gegenübergestellt ist, so dass Wärme von der Schweißzunge 1 durch Wärmeübergang und Wärmestrahlung auf die Gegendruckplatte 2 und/oder das Bandführungselement 4 übertragen wird.

Alternativ oder zusätzlich zu einem Vorheizen vermittels der heißen Schweißzunge 1 kann das Verfahren vorsehen, dass der Stempel 3 und/oder die Gegendruckplatte 2 und/oder das Bandführungselement 4 unabhängig von der Schweißzunge 1 beheizbar sind, um diese zumindest vorzuheizen. Hierfür können beispielsweise im Zusammenhang mit der Vorrichtung 10 beschriebene Heizelemente 11, 12, 13 dienen.

Das Verfahren kann außerdem vorsehen, dass die Wärmeleitung in der Gegendruckplatte 2 und/oder im Stempel 3 und/oder im Bandführungselement 4 unterbunden oder erschwert ist und/oder die Wärmekapazität zumindest der dem Stempel 3 gegenüberliegenden Partie der Gegendruckplatte 2 und/oder des der Gegendruckplatte 2 zugewandten Teils des Stempels 3 und/oder des Bandführungselements 4 durch entsprechende Auswahl eines Werkstoffs mit geringer Wärmekapazität klein gehalten ist. Dadurch wird die Vor- und/oder Aufheizphase wesentlich beschleunigt.

Um die Wärmeleitung in der Gegendruckplatte 2 und/oder im Stempel 3 und/oder im Bandführungselement 4 zu unterbinden oder zu erschweren, können beispielsweise im Zusammenhang mit der Vorrichtung 10 beschriebene Wärmebreschen 14, 15, 16 dienen.

Die Wärmekapazität zumindest der dem Stempel 3 gegenüberliegenden Partie der Gegendruckplatte 2 und/oder des der Gegendruckplatte 2 zugewandten Teils des Stempels 3 und/oder des Bandführungselements 4 kann beispielsweise durch Wahl eines Werkstoffs mit kleiner Wärmespeicherzahl klein gehalten werden.

So weisen beispielsweise im Vergleich zu Eisen mit einer Wärmespeicherzahl von 3534 kJ/(m³ K):
- Kupfer mit einer Wärmespeicherzahl von 3434 kJ/(m³ K),
- Zink mit einer Wärmespeicherzahl von 2770 kJ/(m³ K),
- Gold mit einer Wärmespeicherzahl von 2470 kJ/(m³ K),
- Silber mit einer Wärmespeicherzahl von 2465 kJ/(m³ K),
- Aluminium mit einer Wärmespeicherzahl von 2422 kJ/(m³ K),
- Titan mit einer Wärmespeicherzahl von 2354 kJ/(m³ K),
- Zinn mit einer Wärmespeicherzahl von 1655 kJ/(m³ K), und
- Blei mit einer Wärmespeicherzahl von 1480 kJ/(m³ K),
eine teils deutlich geringere Wärmespeicherzahl auf, wohingegen Nickel eine deutlich höhere Wärmespeicherzahl von 3955 kJ/(m³ K) aufweist.

Gemäß dem Verfahren kann vorgesehen sein, dass die Vorheizung auf eine Temperatur erfolgt, welche einer im laufenden Umreifungsprozess als stationäre Endtemperatur erreichten Temperatur entspricht. Die Temperatur, auf die vorgeheizt wird, kann beispielsweise durch Aufheizen über eine vorher ermittelte begrenzte Zeitdauer erhalten werden und/oder sie kann über einen Temperatursensor überwacht sein, wobei bei Erreichen der vorgegebenen oder erwarteten Temperatur die Vorheizung endet und/oder der Umreifungsprozess startet.

Das Verfahren kann außerdem vorsehen, dass vor oder nach dem Verschweißen der bei fertig hergestellter Umreifung einander überlappenden Enden des Umreifungsbands 5 dessen Abschneiden erfolgt. Außerdem kann das Verfahren vorsehen, dass unter das Umreifungsband 5 zur Schonung der Artikel ein Kantenschutz eingebracht wird. Vor und zumindest während des Verschweißens kann das gegebenenfalls gespannte Umreifungsband außerdem vermittels der Vorrichtung 10 geklemmt werden, um die gegebenenfalls aufgebrachte Spannung aufrecht zu erhalten sowie die Verschweißung bis zum Erreichen deren ausreichender Belastbarkeit zu entlasten.

Zusammengefasst sieht das Verfahren vor, vor dem Beginn eines Umreifungsprozesses, spätestens jedoch zu Beginn der Produktion, die beim Verschweißen benötigten und/oder mit dem Umreifungsband in Kontakt kommenden und/oder wie ein Reflektor für von der Schweißzunge 1 ausgehende Wärmestrahlung wirkenden Komponenten aufzuheizen. Dadurch werden Wärmeverluste insbesondere zu Beginn des Umreifungsprozesses durch ansonsten nicht erwiderte Wärmeleitung und/oder Wärmestrahlung in die beim Stand der Technik noch kalten Komponenten vermieden. Das Auf- oder Vorheizen kann durch Wärmestrahlung, beispielsweise durch Infrarotstrahlung, oder durch Wärmeleitung, beispielsweise ausgehend von in die Komponenten integrierte, beheizbare Heizelemente 11, 12, 13, oder ein Anpressen an die oder der beheizbare Schweißzunge 1 erfolgen. Die erforderliche Betriebstemperatur kann dadurch beeinflusst werden, dass das Aufheizen über eine vorher ermittelte begrenzte Zeitdauer erfolgt oder die über einen Temperatursensor ermittelt wird. Um Wärmeverluste zu vermeiden ist es sinnvoll, die erwärmten Komponenten zu isolieren. Des Weiteren besteht die Möglichkeit, beispielsweise die mit dem Umreifungsband 5 in Berührung kommenden Komponenten Gegendruckplatte 2 und Stempel 3 aus einem schlecht wärmeleitenden Material zu fertigen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Schweißzunge
- 2: Gegendruckplatte
- 3: Stempel
- 4: Bandführungselement
- 5: Umreifungsband
- 6: Klemmbacke
- 7: Klemmbacke
- 8: Mittel
- 9: Mittel
- 10: Vorrichtung
- 11: Heizelement
- 12: Heizelement
- 13: Heizelement
- 14: Wärmebresche
- 15: Wärmebresche
- 16: Wärmebresche
- 80: Steuermittel
- 81: Verbindungslinie
- 82: Verbindungslinie

## Patentansprüche

1. Verfahren zur Verschweißung von Umreifungsbändern (5) aus Kunststoff mit Hilfe einer Umreifungsvorrichtung (10), welche zumindest:
- ein Bandführungselement (4), welches ein zuvor um eine Artikelgruppe gelegtes und gegebenenfalls gespanntes Umreifungsband (5) über dessen eigene Enden überlappend führt,
- eine beheizbare Schweißzunge (1), die zwischen einer Arbeitsposition, in welcher die heiße Schweißzunge (1) zwischen die einander überlappenden Enden des Umreifungsbands (5) ragt, um dieses anzuschmelzen, und einer Rückzugsposition, bei welcher die Schweißzunge (1) zwischen den beiden überlappenden Enden des Umreifungsbands (5) herausgezogen ist, beweglich angeordnet ist,
- eine Gegendruckplatte (2), und
- einen Stempel (3), der nach dem Zurückziehen der Schweißzunge (1) aus deren Arbeitsposition in deren Rückzugsposition die beiden überlappenden Enden des Umreifungsbands (5) gegen zumindest eine Partie der Gegendruckplatte (2) und dabei gegeneinander presst und so die überlappenden Enden des angeschmolzenen Umreifungsbands (5) miteinander verschweißt,
umfasst, **dadurch gekennzeichnet, dass** spätestens und/oder zumindest zu Beginn eines Umreifungsprozesses zumindest:
- eine dem Stempel (3) gegenüberliegende Partie der Gegendruckplatte (2), und/oder
- ein der Gegendruckplatte (2) zugewandter Teil des Stempels (3), und/oder
- ein der Schweißzunge (1), dem Stempel (3) und der Gegendruckplatte (2) zugewandter Bereich des Bandführungselements (4)
vorgeheizt wird.

2. Verfahren nach Anspruch 1, wobei zusätzlich die Schweißzunge (1) vorgeheizt wird.

3. Verfahren nach Anspruch 1 oder 2, wobei die Vorheizung durch Wärmestrahlung und/oder durch Wärmeleitung erfolgt.

4. Verfahren nach einem der Ansprüche 1, 2 oder 3, wobei die Vorheizung des der Gegendruckplatte (2) zugewandten Teils des Stempels (3) erfolgt, indem bei beheizter und/oder heißer Schweißzunge (1) der Stempel (3) gegen die Schweißzunge (1) bewegt wird, so dass Wärmeleitung zwischen der Schweißzunge (1) und dem Stempel (3) stattfindet.

5. Verfahren nach einem der voranstehenden Ansprüche, wobei die Vorheizung der dem Stempel (3) gegenüberliegenden Partie der Gegendruckplatte (2) und/oder des zumindest der Schweißzunge (1), dem Stempel (3) und der Gegendruckplatte (2) zugewandten Bereichs des Bandführungselements (4) erfolgt, indem die heiße Schweißzunge (1) der Gegendruckplatte (2) gegenübergestellt wird, so dass Wärme von der Schweißzunge (1) durch Wärmeübergang und Wärmestrahlung auf die Gegendruckplatte (2) und/oder das Bandführungselement (4) übertragen wird.

6. Verfahren nach einem der voranstehenden Ansprüche, wobei die Vorheizung des der Gegendruckplatte (2) zugewandten Teils des Stempels (3) und die Vorheizung der dem Stempel (3) gegenüberliegenden Partie der Gegendruckplatte (2) erfolgen, indem bei beheizter und/oder heißer Schweißzunge (1) der Stempel (3) so stark gegen die Schweißzunge (1) gepresst wird, dass diese auf ihrer dem Stempel (3) abgewandten Seite an der Gegendruckplatte (2) zum Anliegen kommt, wodurch Wärmeleitung zwischen der Schweißzunge (1) und dem Stempel (3) sowie zwischen der Schweißzunge (1) und der Gegendruckplatte (2) stattfindet.

7. Verfahren nach einem der voranstehenden Ansprüche, wobei der Stempel (3) und/oder die Gegendruckplatte (2) und/oder das Bandführungselement (4) unabhängig von der Schweißzunge (1) beheizbar sind, um diese zumindest vorzuheizen.

8. Verfahren nach einem der voranstehenden Ansprüche, wobei die Wärmeleitung in der Gegendruckplatte (2) und/oder im Stempel (3) und/oder im Bandführungselement (4) unterbunden oder erschwert ist und/oder die Wärmekapazität zumindest der dem Stempel (3) gegenüberliegenden Partie der Gegendruckplatte (2) und/oder des der Gegendruckplatte (2) zugewandten Teils des Stempels (3) und/oder des Bandführungselements (4) klein gehalten ist.

9. Verfahren nach einem der voranstehenden Ansprüche, wobei die Vorheizung auf eine Temperatur erfolgt, welche einer im laufenden Umreifungsprozess als stationäre Endtemperatur erreichten Temperatur entspricht.

10. Verfahren nach einem der voranstehenden Ansprüche, wobei die Temperatur, auf die vorgeheizt wird, durch Aufheizen über eine vorher ermittelte begrenzte Zeitdauer erhalten wird und/oder überwacht wird, wobei bei Erreichen der Temperatur die Vorheizung endet und/oder der Umreifungsprozess startet.

11. Vorrichtung (10) zur Verschweißung von Umreifungsbändern (5) aus Kunststoff, welche zumindest:
- ein Bandführungselement (4), welches das zuvor um eine Artikelgruppe gelegte und gegebenenfalls gespannte Umreifungsband (5) über dessen eigene Enden überlappend führt,
- eine beheizbare Schweißzunge (1), die zwischen einer Arbeitsposition, in welcher die heiße Schweißzunge (1) zwischen die einander überlappenden Enden des Umreifungsbands (5) ragt, um dieses anzuschmelzen, und einer Rückzugsposition, bei welcher die Schweißzunge (1) zwischen den beiden überlappenden Enden des Umreifungsbands (5) herausgezogen ist, beweglich angeordnet ist,
- eine Gegendruckplatte (2), und
- einen Stempel (3), der nach dem Zurückziehen der Schweißzunge (1) aus deren Arbeitsposition in deren Rückzugsposition die beiden überlappenden Enden des Umreifungsbands (5) gegen zumindest eine Partie der Gegendruckplatte (2) und dabei gegeneinander presst und so die überlappenden Enden des angeschmolzenen Umreifungsbands (5) miteinander verschweißt
umfasst, **gekennzeichnet durch** Mittel (8), um spätestens und/oder zumindest zu Beginn eines Umreifungsprozesses zumindest:
- eine dem Stempel (3) gegenüberliegende Partie der Gegendruckplatte (2), und/oder
- einen der Gegendruckplatte (2) zugewandten Teil des Stempels (3), und/oder
- einen der Schweißzunge (1), dem Stempel (3) und der Gegendruckplatte (2) zugewandten Bereich des Bandführungselements (4)
vorzuheizen.

12. Vorrichtung nach Anspruch 11, wobei die Vorrichtung zusätzlich Mittel (9) zum Vorheizen der Schweißzunge (1) umfasst.

13. Vorrichtung nach Anspruch 11 oder 12, wobei die Mittel (8), um spätestens und/oder zumindest zu Beginn eines Umreifungsprozesses zumindest:
- eine dem Stempel (3) gegenüberliegende Partie der Gegendruckplatte (2), und/oder
- einen der Gegendruckplatte (2) zugewandten Teil des Stempels (3), und/oder
- einen der Schweißzunge (1), dem Stempel (3) und der Gegendruckplatte (2) zugewandten Bereich des Bandführungselements (4)
vorzuheizen, Steuermittel (80) umfassen, welche:
- bei beheizter und/oder heißer Schweißzunge (1) den Stempel (3) gegen die Schweißzunge (1) bewegen, und/oder
- die heiße Schweißzunge (1) der Gegendruckplatte (2) und/oder dem zumindest einen der Schweißzunge (1), dem Stempel (3) und der Gegendruckplatte (2) zugewandten Bereich des Bandführungselements (4) gegenüberstellen, und/oder
- den Stempel (3) dazu veranlassen, bei beheizter und/oder heißer Schweißzunge (1) so stark gegen die Schweißzunge (1) zu pressen, dass die Schweißzunge (1) auf ihrer dem Stempel (3) abgewandten Seite an der Gegendruckplatte (2) zum Anliegen kommt.

14. Vorrichtung nach Anspruch 11, 12 oder 13, wobei die Vorrichtung (10) mindestens ein Heizelement (11, 12, 13) zur Beheizung zumindest:
- des der Gegendruckplatte (2) zugewandten Teils des Stempels (3), und/oder
- der dem Stempel (3) gegenüberliegenden Partie der Gegendruckplatte (2), und/oder
- des der Schweißzunge (1), dem Stempel (3) und der Gegendruckplatte (2) zugewandten Bereichs des Bandführungselements (4)
umfasst.

15. Vorrichtung nach einem der Ansprüche 11 bis 14, wobei zumindest:
- die dem Stempel (3) gegenüberliegende Partie der Gegendruckplatte (2), und/oder
- der der Gegendruckplatte (2) zugewandte Teil des Stempels (3), und/oder
- der der Schweißzunge (1), dem Stempel (3) und der Gegendruckplatte (2) zugewandte Bereich des Bandführungselements (4)
aus einem schlecht wärmeleitenden Material und/oder einem Material mit geringer Wärmekapazität hergestellt ist, und/oder zumindest:
- die dem Stempel (3) gegenüberliegende Partie der Gegendruckplatte (2) gegenüber sich an die Gegendruckplatte (2) anschließende Elemente der Vorrichtung (10), und/oder
- der der Gegendruckplatte (2) zugewandte Teil des Stempels (3) gegenüber sich an den Stempel (3) anschließende Elemente der Vorrichtung (10), und/oder
- den der Schweißzunge (1), dem Stempel (3) und der Gegendruckplatte (2) zugewandten Bereich des Bandführungselements (4) von einem verbleibenden Bereich des Bandführungselements (4) und/oder sich an das Bandführungselement (4) anschließende Elementen der Vorrichtung (10)
wärmetechnisch isoliert ist, und/oder
- die Gegendruckplatte (2), und/oder
- der Stempel (2), und/oder
- das Bandführungselement (4)
mit einer oder mehreren Wärmebreschen (14, 15, 16) hergestellt sind.

## Claims

1. Method for welding of strapping bands (5) made of plastic by means of a strapping device (10), comprising at least:
- a band guide member (4), which guides a strapping band (5) previously laid and optionally tensioned around a group of articles via its overlapping own ends,
- a heatable welding tongue (1), movably arranged between a working position and a retreat position, wherein the hot welding tongue (1) in its work position protrudes between the overlapping ends of the strapping band (5) to melt the overlapping ends of the strapping band (5), and wherein the welding tongue (1) in its retreat position is pulled out between the two overlapping ends of the strapping band (5),
- a counter- pressure plate (2), and
- a stamp (3) that presses the two overlapping melted ends of the strapping band (5) against at least one portion of the counter- pressure plate (2) and thereby against each other after retracting the welding tongue (1) from the working position to the retreat position, thereby welding together the melted overlapping ends of the strapping band (5),
**characterized in that** at the latest and / or at least at the beginning of a strapping process at least :
- a part of the counter- pressure plate (2) opposite to the stamp (3), and / or
- a part of the stamp (3) facing the counter- pressure plate (2), and / or
- a part of the band guide member (4) facing the welding tongue (1), the stamp (3) and the counter- pressure plate (2)
is preheated.

2. Method according to claim 1, wherein the welding tongue (1) is preheated additionally.

3. Method according to claim 1 or 2, whereby the preheating takes place by heat radiation and / or by thermal conduction.

4. Method according to one of the claims 1, 2 or 3, whereby the preheating of the part of the stamp (3) facing the counter- pressure plate (2) takes place by moving the stamp (3) against the heated and / or hot welding tongue (1), whereby a conduction of heat between the welding tongue (1) and the stamp (3) takes place.

5. Method according to one of the previous claims, whereby the preheating of the part of the counter- pressure plate (2) opposite to the stamp (3) and / or of the part of the band guide member (4) facing at least the welding tongue (1), the stamp (3) and the counter- pressure plate (2), wherein the hot welding tongue (1) and the counter-pressure plate (2) are set up facing each other, whereby the heat of the welding tongue (1) is transmitted through heat transfer and heat radiation onto the counter-pressure plate (2) and / or the band guide member (4).

6. Method according to one of the previous claims, whereby the preheating of the part of the stamp (3) facing the counter- pressure plate (2) and the preheating of the part of the counter- pressure plate (2) opposite to the stamp (3) take place whereby the stamp (3) is so strongly pressed against the heated and / or hot welding tongue (1) that, whereby the part of the welding tongue (1) averting the stamp (3) rests against the counter- pressure plate (2), whereby heat conduction between the welding tongue (1) and the stamp (3) and between the welding tongue (1) and the counter- pressure plate (2) occurs.

7. Method according to one of the previous claims, wherein the stamp (3) and / or the counter- pressure plate (2) and / or the band guide member (4) can be heated independently of the welding tongue (1), to be at least preheated.

8. Method according to one of the previous claims, wherein the heat conduction in the counter-pressure plate (2) and / or in the stamp (3) and / or the band guide member (4) is prevented or made more difficult and / or wherein the heat capacity of the part of the counter- pressure plate (2) opposite to the stamp (3) and / or of the part if the stamp facing the counter-pressure plate (2) and / or of the band guide element (4) is kept small.

9. Method according to one of the previous claims, wherein said preheating is effected up to a temperature corresponding to a temperature reached as stationary final temperature during the strapping process

10. Method according to one of the previous claims, wherein the preheating temperature is obtained and / or monitored by heating a previously determined limited period of time, wherein on reaching the temperature, the pre-heating ends and / or the strapping process is started.

11. Device (10) for welding of strapping bands (5) made of plastic, comprising at least :
- a band guide member (4), which guides a strapping band (5) via its overlapping own ends, whereby the strapping band (5) is previously laid and optionally tensioned around a group of articles,
- a heatable welding tongue (1), movably arranged between a working position and a retreat position, wherein the hot welding tongue (1) in its work position protrudes between the overlapping ends of the strapping band (5) to melt the overlapping ends of the strapping band (5), and wherein the welding tongue (1) in its retreat position is pulled out between the two overlapping ends of the strapping band (5),
- a counter- pressure plate (2), and
- a stamp (3) that presses the two overlapping melted ends of the strapping band (5) against at least one portion of the counter- pressure plate (2) and thereby against each other after retracting the welding tongue (1) from the working position to the retreat position, thereby welding together the melted overlapping ends of the strapping band (5),
**characterized by** means (8) for preheating at the latest and / or at least at the beginning of a strapping process at least:
- a part of the counter- pressure plate (2) opposite to the stamp (3), and / or
- a part of the stamp (3) facing the counter- pressure plate (2), and / or
- a part of the band guide member (4) facing the welding tongue (1), the stamp (3) and the counter- pressure plate (2)

12. Device according to claim 11, wherein the device additionally comprises means for preheating the welding tongue (1).

13. Device according to claim 11 or 12, wherein the means (8) for preheating at least:
- a part of the counter- pressure plate (2) opposite to the stamp (3), and / or
- a part of the stamp (3) facing the counter- pressure plate (2), and / or
- a region of the band guide member (4) facing the welding tongue (1), the stamp (3) and the counter- pressure plate (2)
at the latest and / or at least at the beginning of a strapping process, comprise control means (80) that:
- move the stamp (3) against the heated or hot welding tongue (1), and / or
- set up the hot welding tongue (1) against the counter- pressure plate (2) and / or set up the hot welding tongue (1) against at least a part of the band guide member (4) facing the welding tongue (1), the stamp (3) and the counter- pressure plate (2) and / or
- cause the stamp (3) to push against the heated or hot welding tongue so strongly that the welding tongue (1) rests on the counter- pressure plate (2) on its side that is turned away from the stamp.

14. Device according to claim 11, 12, or 13, wherein the device comprises at least one heating element (11, 12, 13) for the heating of at least:
- the part of the stamp (3) facing the counter- pressure plate (2), and / or
- the part of the counter- pressure plate (2) opposite the stamp (3), and / or
- the part of the band guide member (4) facing the welding tongue (1), the stamp (3) and the counter- pressure plate (2).

15. Device according to one of the claims 11 to 14, wherein at least :
- the part of the counter- pressure plate (2) opposite the stamp (3), and / or
- the part of the stamp (3) facing the counter- pressure plate (2), and / or
- the part of the band guide member (4) facing the welding tongue (1), the stamp (3) and the counter- pressure plate (2)
is made of a material with poor heat- conducting properties and / or of a material having low thermal capacity, and / or wherein at least
- the part of the counter- pressure plate (2) opposite the stamp (3) is thermally insulated against elements of the device (10) attached to the counter- pressure plate (2), and / or
- the part of the stamp (3) facing the counter- pressure plate (2) is thermally insulated against elements of the device (10) attached to the stamp (3) and / or
- the part of the band guide member (4) facing the welding tongue (1), the stamp (3) and the counter- pressure plate (2) is thermally insulated against from a remaining part of the band guide member (4) and / or from elements of the device (10) attached to the band guide member (4),
and / or wherein
- the counter- pressure plate (2), and / or
- the stamp (2), and / or
- the band guide member (4)
are made with one or more heat gaps (14, 15, 16).

## Revendications

1. Procédé de soudage de bandes de cerclage (5) en matière plastique à l'aide d'un dispositif de cerclage (10) qui comprend au moins:
- un élément de guidage de bande (4) qui guide une bande de cerclage (5) posée auparavant autour d'un groupe d'articles et le cas échéant tendue, sur ses propres extrémités de manière à ce qu'elles se chevauchent,
- une languette de soudage (1) apte à être chauffée qui est disposée de manière mobile entre une position de travail dans laquelle ladite languette de soudage (1) chaude s'étend entre les extrémités chevauchantes de la bande de cerclage (5) afin de faire fondre celle-ci, et une position de retrait dans laquelle ladite languette de soudage (1) est retirée de la position entre les deux extrémités chevauchantes de la bande de cerclage (5),
- une plaque de contre-pression (2) et
- un piston (3) qui, après avoir retiré la languette de soudage (1) de sa position de travail dans sa position de retrait, presse les deux extrémités chevauchantes de la bande de cerclage (5) contre au moins une partie de ladite plaque de contre-pression (2) et, ce faisant, l'une contre l'autre et soude ainsi entre elles les extrémités chevauchantes de la bande de cerclage (5) fondue,
**caractérisé par le fait que**, au plus tard et/ou au moins au début d'un processus de cerclage, au moins:
- une partie de la plaque de contre-pression (2), qui est située en regard du piston (3), et/ou
- une partie du piston (3) tournée vers la plaque de contre-pression (2), et/ou
- une zone dudit élément de guidage de bande (4) tournée vers la languette de soudage (1), le piston (3) et la plaque de contre-pression (2)
est préchauffée.

2. Procédé selon la revendication 1, dans lequel, en sus, la languette de soudage (1) est préchauffée.

3. Procédé selon la revendication 1 ou 2, dans lequel le préchauffage se fait par rayonnement thermique et/ou par conduction de chaleur.

4. Procédé selon l'une quelconque des revendications 1, 2 ou 3, dans lequel le préchauffage de la partie du piston (3) tournée vers la plaque de contre-pression (2) se fait en déplaçant le piston (3), lorsque la languette de soudage (1) est chauffée et/ou chaude, contre la languette de soudage (1) de sorte que de la conduction de chaleur a lieu entre la languette de soudage (1) et le piston (3).

5. Procédé selon l'une quelconque des revendications précédentes, dans lequel le préchauffage de la partie de la plaque de contre-pression (2), qui est située en regard du piston (3) et/ou de la zone dudit élément de guidage de bande (4) qui est tournée au moins vers la languette de soudage (1), le piston (3) et la plaque de contre-pression (2) se fait en positionnant la languette de soudage (1) chaude en regard de la plaque de contre-pression (2) de sorte que de la chaleur est transmise par transfert de chaleur et par rayonnement thermique de la languette de soudage (1) à la plaque de contre-pression (2) et/ou à la bande de guidage de bande (4).

6. Procédé selon l'une quelconque des revendications précédentes, dans lequel le préchauffage de la partie du piston (3) qui est tournée vers la plaque de contre-pression (2) et le préchauffage de la partie de la plaque de contre-pression (2), qui est située en regard du piston (3) se font en pressant le piston (3), lorsque la languette de soudage (1) est chauffée et/ou chaude, d'une manière tellement forte contre la languette de soudage (1) que celle-ci, sur sa face opposée au piston (3), vient en appui sur la plaque de contre-pression (2) provoquant ainsi une conduction de chaleur entre la languette de soudage (1) et le piston (3) ainsi qu'entre la languette de soudage (1) et la plaque de contre-pression (2).

7. Procédé selon l'une quelconque des revendications précédentes, dans lequel ledit piston (3) et/ou ladite plaque de contre-pression (2) et/ou ledit élément de guidage de bande (4) peuvent être chauffés indépendamment de la languette de soudage (1) afin d'au moins préchauffer ceux-ci.

8. Procédé selon l'une quelconque des revendications précédentes, dans lequel la conduction de chaleur dans la plaque de contre-pression (2) et/ou dans le piston (3) et/ou dans l'élément de guidage de bande (4) est empêchée ou rendue difficile et/ou la capacité thermique au moins de la partie de la plaque de contre-pression (2), qui est située en regard du piston (3) et/ou de la partie du piston (3) tournée vers la plaque de contre-pression (2) et/ou de l'élément de guidage de bande (4) est maintenue faible.

9. Procédé selon l'une quelconque des revendications précédentes, dans lequel le préchauffage se fait à une température qui correspond à une température atteinte comme température finale stationnaire lors du processus de cerclage en cours.

10. Procédé selon l'une quelconque des revendications précédentes, dans lequel la température à laquelle on préchauffe est obtenue en chauffant sur une durée limitée déterminée auparavant et/ou est surveillée, dans lequel, lorsque la température est atteinte, le préchauffage se termine et/ou le processus de cerclage commence.

11. Dispositif (10) de soudage de bandes de cerclage (5) en matière plastique, qui comprend au moins:
- un élément de guidage de bande (4) qui guide la bande de cerclage (5) posée auparavant autour d'un groupe d'articles et le cas échéant tendue, sur ses propres extrémités de manière à ce qu'elles se chevauchent,
- une languette de soudage (1) apte à être chauffée qui est disposée de manière mobile entre une position de travail dans laquelle ladite languette de soudage (1) chaude s'étend entre les extrémités chevauchantes de la bande de cerclage (5) afin de faire fondre celle-ci, et une position de retrait dans laquelle ladite languette de soudage (1) est retirée de la position entre les deux extrémités chevauchantes de la bande de cerclage (5),
- une plaque de contre-pression (2) et
- un piston (3) qui, après avoir retiré la languette de soudage (1) de sa position de travail dans sa position de retrait, presse les deux extrémités chevauchantes de la bande de cerclage (5) contre au moins une partie de ladite plaque de contre-pression (2) et, ce faisant, l'une contre l'autre et soude ainsi entre elles les extrémités chevauchantes de la bande de cerclage (5) fondue,
**caractérisé par** des moyens (8) destinés à préchauffer au plus tard et/ou au moins au début d'un processus de cerclage au moins:
- une partie de la plaque de contre-pression (2), qui est située en regard du piston (3), et/ou
- une partie du piston (3) tournée vers la plaque de contre-pression (2), et/ou
- une zone dudit élément de guidage de bande (4) tournée vers la languette de soudage (1), le piston (3) et la plaque de contre-pression (2).

12. Dispositif selon la revendication 11, ledit dispositif comprenant en sus des moyens (9) de préchauffage de la languette de soudage (1).

13. Dispositif selon la revendication 11 ou 12, dans lequel les moyens (8) destinés à préchauffer au plus tard et/ou au moins au début d'un processus de cerclage au moins:
- une partie de la plaque de contre-pression (2), qui est située en regard du piston (3), et/ou
- une partie du piston (3) tournée vers la plaque de contre-pression (2), et/ou
- une zone dudit élément de guidage de bande (4) tournée vers la languette de soudage (1), le piston (3) et la plaque de contre-pression (2),
comprennent des moyens de commande (80) qui:
- lorsque la languette de soudage (1) est chauffée et/ou chaude, déplacent le piston (3) contre la languette de soudage (1), et/ou
- positionnent ladite languette de soudage (1) chaude en regard de la plaque de contre-pression (2) et/ou de ladite au moins une zone de l'élément de guidage de bande (4) qui est tournée vers la languette de soudage (1), le piston (3) et la plaque de contre-pression (2), et/ou
- incitent le piston (3), lorsque la languette de soudage (1) est chauffée et/ou chaude, à presser d'une manière tellement forte contre la languette de soudage (1) que la languette de soudage (1), sur sa face opposée au piston (3), vient en appui sur la plaque de contre-pression (2).

14. Dispositif selon la revendication 11, 12 ou 13, dans lequel le dispositif (10) comprend au moins un élément de chauffage (11, 12, 13) destiné à chauffer au moins:
- la partie du piston (3) tournée vers la plaque de contre-pression (2), et/ou
- la partie de la plaque de contre-pression (2), qui est située en regard du piston (3), et/ou
- la zone dudit élément de guidage de bande (4) tournée vers la languette de soudage (1), le piston (3) et la plaque de contre-pression (2).

15. Dispositif selon l'une quelconque des revendications 11 à 14, dans lequel au moins:
- la partie de la plaque de contre-pression (2), qui est située en regard du piston (3), et/ou
- la partie du piston (3) tournée vers la plaque de contre-pression (2), et/ou
- la zone dudit élément de guidage de bande (4) tournée vers la languette de soudage (1), le piston (3) et la plaque de contre-pression (2)
est réalisée à partir d'un matériau ayant une mauvaise conduction de chaleur et/ou d'un matériau ayant une faible capacité thermique, et/ou au moins:
- la partie de la plaque de contre-pression (2), qui est située en regard du piston (3) est isolée thermiquement par rapport à des éléments du dispositif (10) contigus à la plaque de contre-pression (2), et/ou
- la partie du piston (3) tournée vers la plaque de contre-pression (2) est isolée thermiquement par rapport à des éléments du dispositif (10) contigus au piston (3), et/ou
- la zone dudit élément de guidage de bande (4) tournée vers la languette de soudage (1), le piston (3) et la plaque de contre-pression (2) est isolée thermiquement par rapport à une zone restante de l'élément de guidage de bande (4) et/ou à des éléments du dispositif (10) contigus à l'élément de guidage de bande (4),
et/ou
- la plaque de contre-pression (2) et/ou
- le piston (2) et/ou
- l'élément de guidage de bande (4) sont réalisés avec une ou plusieurs brèches de chaleur (14, 15, 16).
